# FASCICULE DE BREVET EUROPEEN

(11) **EP 2 211 435 B1**
(45) Date de publication et mention de la délivrance du brevet: **17.02.2021**
(21) Numéro de dépôt: 09354053.2
(22) Date de dépôt: 10.12.2009
(51) Int. Cl.: H02G 3/00

(54) **Interface de commande d'effecteurs et récepteur de commande basse puissance destiné à ladite interface**
Befehlsschnittstelle für Antriebselemente und Niedrigleistungsbefehlsempfänger für diese Befehlsschnittstelle
Command interface for actuators and command receiver of low power for said interface

(30) Priorité: 26.01.2009 FR 0900320
(43) Date de publication de la demande: 28.07.2010
(73) Titulaire: Schneider Electric Industries SAS, 92500 Rueil-Malmaison (FR)
(72) Inventeur: Vidalenche, Gilles, 38050 Grenoble Cedex 09 (FR); Cartoux, Bernard, 38050 Grenoble Cedex 09 (FR)
(74) Mandataire: Tripodi, Paul

(56) Documents cités:
- EP-A- 0 495 322
- WO-A-92/03864
- FR-A- 2 597 215
- JP-A- 2007 020 014

## Description

### DOMAINE TECHNIQUE DE L'INVENTION

L'invention est relative à une interface de commande d'effecteurs de puissance L'interface de commande comprend un bloc de contrôle actif destiné à transformer un ordre de commande très basse tension émis par au moins un récepteur de commande très basse tension en une commande électrique destinée à au moins un effecteur de puissance.

L'invention est aussi relative à un récepteur de commande très basse tension destiné à être connecté à une interface de commande selon l'invention.

### ETAT DE LA TECHNIQUE ANTERIEURE

Il est connu des dispositifs de commande autorisant le pilotage d'un ou plusieurs effecteurs de forte puissance placés à distance dans un espace d'intervention. Il est aussi connu des dispositifs de commande autorisant le pilotage d'un ou plusieurs modes de fonctionnement d'un même effecteur. Les dispositifs de commande peuvent comporter des interfaces commande très basse tension. On entend par très basse tension des tensions alternatives inférieures à 50 Volts ou des tensions continues inférieures à 120 Volts. Ces valeurs sont définies dans la norme française NF C 15-100. Ce type de dispositif privilégiant la sécurité de l'utilisateur peut être employé dans applications liées au résidentiel, ou liées à des établissements publics tels que des écoles, garderies, hôpitaux, hôtel...

L'installation et la mise en œuvre de dispositifs de commande comprenant plusieurs interfaces multi-commandes dans l'espace d'intervention est complexe à réaliser pour un installateur. En outre, la maintenance peut être complexe et difficile à réaliser. A titre d'exemple, pour une installation électrique comprenant des luminaires, des moyens occultant ou tout autre récepteur électrique fonctionnant en tout ou rien, les interfaces de commande de ces effecteurs nécessitent généralement un interrupteur au niveau de l'interface de commande et un câble comportant une paire de fils reliant ladite interface à l'effecteur. La complexité provient du nombre de câbles à mettre en œuvre, du nombre d'interconnexion à réaliser entre ces câbles et des risques important d'erreur au câblage. En effet, les câbles ainsi installés sont interconnectés dans des boites de dérivation ou des armoires électriques afin de réaliser des circuits de type alimentation directe avec un point de commande, des circuits de type va et vient avec deux points de commande ou de circuit de type télérupteur avec plusieurs points de commande.

Dans tous les cas cités ci-dessus, il n'est possible de réaliser qu'une fonction de commande par câble et donc de ne commander qu'un seul effecteur. En outre, il est nécessaire pour l'installateur de câbler les phases et les neutres des câbles de commande et d'alimentation des effecteurs directement sur les interfaces de commandes. Une erreur de câblage peut provoquer dans le meilleur des cas un non-fonctionnement de l'effecteur ou dans le pire des cas un court circuit. Enfin, dans les installations dite « directes » ou « va et vient », la section du câble utilisé doit être apte à supporter un courant nominal de fonctionnement de l'effecteur commandé. Ce dimensionnement des câbles électriques augmente le cout du matériel. L'utilisation de télérupteurs impose que les câbles électriques soient capables de supporter la tension du réseau.

Pour résoudre certains problèmes cités ci-dessus, l'utilisation de bus de commande peut être préconisée. Les bus de commande peuvent être de type filaire ou de type radio. Dans une installation réalisée avec un bus de commande filaire ou radio, chaque commande doit être appairée spécifiquement avec un effecteur. Cette procédure d'appairage nécessite l'utilisation de matériels spécifiques tels qu'un contrôleur et/ou une interface de programmation. En outre, ladite procédure, parfois complexe doit être scrupuleusement respectée pour un bon fonctionnement de l'installation. La maintenance de l'installation nécessite l'intervention d'agent technique spécialisé possédant une bonne connaissance du fonctionnement du contrôleur et de l'interface de programmation. Enfin, en cas d'extension de l'installation pour ajouter de nouveaux effecteurs, une nouvelle procédure d'appairage peut être nécessaire.

Des systèmes comprenant des récepteurs de commande connectés à des interfaces de commande d'effecteurs destinés à commander des effecteurs de puissance sont connus du documents WO A1 92/03864 et EP A1 0 495 322.

### EXPOSE DE L'INVENTION

L'invention vise donc à remédier aux inconvénients de l'état de la technique, de manière à proposer une interface de commande d'effecteurs simple et efficace.

L'interface de commande d'effecteurs de puissance selon l'invention est défini par la revendication 1. Une combinaison comprenant un récepteur de commande très basse tension connecté à une interface selon la revendication 1 est défini par la revendication 5.

Avantageusement, chaque seconde sortie est reliée à au moins deux ports d'entrée distincts du bloc passif de transformation via un bus interne d'information.

Avantageusement, les ports d'entrée du bloc passif de transformation comportent des moyens de connexion destinés à être reliés à un récepteur de commande très basse tension via des moyens de communication très basse tension de type BUS.

De préférence, les moyens de connexion comporte une prise débrochable.

Le récepteur de commande très basse tension selon l'invention comporte des moyens de commande destinés à générer au moins une commande impulsionnelle, ladite au moins une commande impulsionnelle étant destinée à être transmise à un port d'entrée du bloc passif de transformation via des moyens de communication très basse tension de type BUS pour mettre en court-circuit le bus interne commun et un bus interne d'information.

Selon un mode particulier de réalisation, les moyens de commande comportent au moins un interrupteur à deux positions destiné à générer une commande impulsionnelle de type ouvert-fermé.

Avantageusement, le récepteur de commande très basse tension comporte un premier port de connexion destiné à être relié à un port d'entrée d'un bloc passif de transformation via des moyens de communication très basse tension de type BUS.

De préférence, le premier port de connexion comporte une prise débrochable.

De préférence, le récepteur de commande basse puissance comporte au moins un second port de connexion relié au premier port de connexion et étant destiné au branchement série ou parallèle d'au moins un second récepteur de commande très basse tension, ledit au moins second récepteur de commande très basse tension étant destiné à générer les mêmes commandes impulsionnelles de type ouvert-fermé que le récepteur de commande très basse tension auquel il est connecté.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

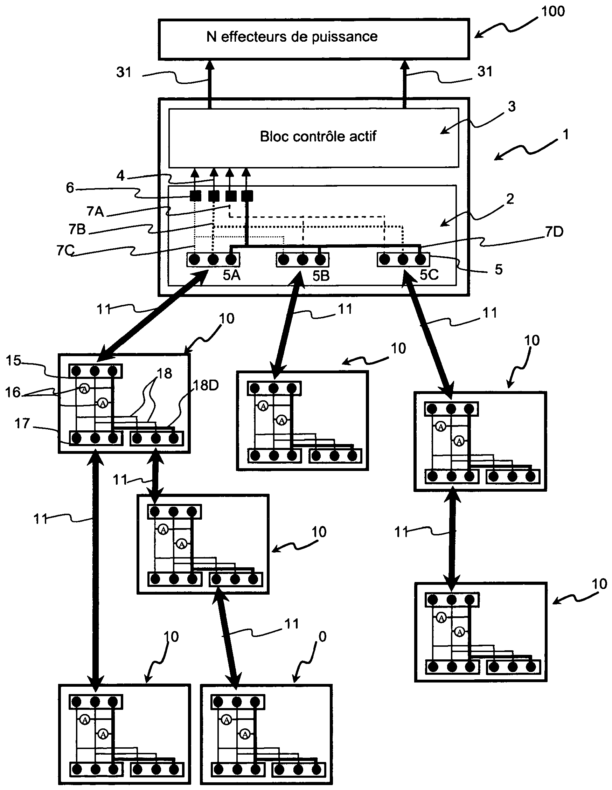

la figure 1 représente une vue schématique d'une interface de commande d'effecteurs selon un premier mode préférentiel de réalisation de l'invention.

### DESCRIPTION DETAILLEE D'UN MODE DE REALISATION

L'interface de commande d'effecteurs 1 selon un mode de réalisation de l'invention est destinée à commander des effecteurs de puissance 100 par des récepteurs de commande très basse tension 10.

A titre d'exemple, si l'interface de commande 1 selon l'invention est dédiée à une chambre d'hotel ou d'hopital, les effecteurs de puissance 100 peuvent être des éclairages et/ou des moyens de chauffage et/ou des moyens occultant tels que des volets électriques.

Les effecteurs de puissance 100 peuvent fonctionner sous des tensions alternatives ou continues.

Lesdits récepteurs de commande très basse puissance sont destinés à être reliés à ladite interface par des moyens de communication très basse tension 11 de type BUS. A titre d'exemple de réaliation, les moyens de communication très basse tension 11 de type BUS comportent un cable réseau de type câble informatique à N paires de conducteurs. A titre d'exemple de réalisation non limitatif, les moyens de communication très basse tension 11 de type BUS comportent un cable réseau à quatre paires de conducteurs destinés à se connecter via des prises de type RJ45. L'utilisation d'autres câbles réseau peut être envisagée notamment des câbles comportant 16 paires de conducteurs destinés à se connecter via des prises de type Sub D 32 broches.

L'interface de commande 1 comprend un bloc de contrôle actif 3 destiné à transformer un ordre de commande très basse tension émis par au moins un récepteur de commande très basse tension 10 en une commande électrique destinée à au moins un effecteur de puissance 100.

L'interface de commande comprend un bloc passif de transformation 2 relié au bloc de contrôle actif 3 par des liaisons électriques très basse tension 4.

Pour de type de d'application, on entend par très basse tension un circuit électrique conforme à la définition de la norme française NF C 15-100.

Le bloc passif de transformation 2 comprend au moins deux ports d'entrée 5A, 5B, 5C destinés à être reliés respectivement à un récepteur de commande très basse tension 10 via les moyens de communication 11 de type BUS. Comme représenté sur la figure 1, à titre d'exemple de réalisation, le bloc passif de transformation 2 comporte trois ports d'entrée 5A, 5B, 5C.

Comme représenté sur la figure 1, le bloc passif de transformation 2 comprend au moins deux sorties 6 interconnectées avec lesdits au moins deux ports d'entrée 5A, 5B, 5C. Les sorties 6 du bloc passif de transformation sont aussi reliées au bloc de contrôle actif 3 via les liaisons électriques basse tension 4.

Le bloc de commande passive 2 comporte des moyens internes de connexion permettant un chaînage entre chacune des entrées des ports d'entrée 5A, 5B, 5C destinées à la commande d'une même fonction. Chaque chainage autorise la mise en connexion électrique d'au moins une entrée avec une seule liaison électrique très basse tension 4.

Comme représenté sur la figure 1, chaque port d'entrée 5A, 5B, 5C du bloc passif de transformation 2 comporte une première entrée reliée à un premier bus interne commun 7D et au moins une seconde entrée 7A, 7B, 7C reliée à un bus interne d'information. A titre d'exemple de réalisation, ce chaînage est réalisé grâce une carte de circuit imprimé. Chaque bus interne commun ou d'information est matérialisé par une piste électrique du circuit. Comme représenté sur la figure 1, selon ce mode de réalisation de l'invention, chaque port d'entrée (5A, 5B 5C) est relié à trois secondes entrées 7A, 7B, 7C.

Une première sortie 6 du bloc passif de transformation 2 est interconnectée d'une part avec tous les bus internes communs 7D et d'autre part au bloc de contrôle actif 3 via une première liaison électrique très basse tension 4.

Au moins un seconde sortie 6 du bloc passif de transformation 2 est interconnectée d'une part avec au moins un bus interne d'information 7A, 7B, 7C et d'autre part au bloc de contrôle actif 3 via au moins une seconde liaison électrique très basse tension 4.

Chaque seconde sortie 6 est reliée à au moins deux ports d'entrée 5A, 5B, 5C distincts du bloc passif de transformation 2 via un bus interne d'information 7A, 7B, 7C.

Le bloc de contrôle actif 3 comprenant au moins deux sorties forte puissance 31 destinées à commander des effecteurs de puissance 100.

Ledit bloc de contrôle actif comprend des moyens de traitement destinés à transformer des ordres de commande très basse tension transmis par les liaisons électriques très basse tension 4 en ordre de commande de puissance pour commander de manière dédiée au moins un effecteur de puissance 100. Les moyens de traitement peuvent comporter de préférence un microcontroleur ou un microprocesseur.

La transformation des ordres de commande très basse puissance en ordre de commande de puissance est réalisée en fonction de scénarios programmés dans ledit module actif. A titre d'exemple de programmation, un scénario consisterait à générer un ordre de commande de puissance d'éclairage pour toute commande très basse puissance issue et véhiculée par un bus interne d'information référencé sur le numéro 7A. Toujours à titre d'exemple de programmation, un scénario consisterait à générer un ordre de commande de puissance d'ouverture et/ou de fermeture de moyens occultant pour toute commande très basse puissance issue et véhiculée par un bus interne d'information référencé sur le numéro 7B. Enfin, un scénario consisterait à générer un ordre de commande de puissance de chauffage pour toute commande très basse puissance issue et véhiculée par un bus interne d'information référencé sur le numéro 7C. Comme représenté sur la figure 1, tout récepteur de commande très basse tension 10 connecté au premier port d'entrée 5A, ne pourra commander que l'éclairage et l'ouverture/fermeture de moyens occultant. Tout récepteur de commande très basse tension 10 connecté au second port d'entrée 5B, ne pourra commander que l'éclairage et le chauffage. Enfin, tout récepteur de commande très basse tension 10 connecté au troisième port d'entrée 5C, ne pourra commander que l'ouverture/fermeture de moyens occultant et le chauffage.

De préférence, les ports d'entrée 5A, 5B, 5C du bloc passif de transformation 2 comportent des moyens de connexion destinés à être reliés à un récepteur de commande très basse tension 10 via des moyens de communication très basse tension 11 de type bus. Selon un mode de développement de l'invention, les moyens de connexion comporte une prise débrochable. Avantageusement, la prise débrochable est de type RJ 45. Ce type de connectique a l'avantage d'être très répandue et d'être très fiable en terme de connexion électrique. D'autres prises débrochables peuvent bien sur être envisagées. L'utilisation de prise débrochable permet une installation ou le remplacement rapide d'un nouveau moyen de communication très basse tension 11 de type bus à l'interface de commande d'effecteurs 1.

Selon un autre mode de développement de l'invention, récepteur de commande très basse tension 10 est connecté à une interface de commande 1 d'effecteurs telle que décrite ci-dessus. Ledit récepteur de commande très basse tension 10 comporte un premier port de connexion 15 destiné à être relié à un des ports d'entrée 5A, 5B, 5C du bloc passif de transformation 2 de l'interface via des moyens de communication très basse tension 11 de type bus.

Ledit premier port de connexion 15 d'un récepteur de commande très basse tension 10 comporte une première sortie reliée à un premier bus interne commun 18D et au moins un second sortie reliée à un bus interne d'information 18. A titre d'exemple de réalisation, ce chaînage est réalisé grâce une carte de circuit imprimée. Chaque bus interne commun ou d'information 18, 18D est matérialisé par une piste électrique du circuit.

Le premier bus interne commun 18D d'un récepteur de commande très basse tension 10 est destiné à être relié au bus interne commun 7D du bloc passif de transformation 2. Chaque bus interne d'information 18 d'un récepteur de commande très basse tension 10 est destiné à être relié à un des bus internes d'information 7A, 7B, 7C du bloc passif de transformation 2.

Ledit premier port de connexion de connexion 15 comprend de préférence une prise débrochable. A titre d'exemple de réalisation la prise débrochable est de type RJ 45. Selon un mode particulier de développement de l'invention, chaque récepteur de commande très basse tension 10 est relié à l'interface de commande 1 via un câble réseau raccordé à chacune de ces extrémités à une prise réseau de type RJ 45.

Le récepteur de commande très basse tension 10 comporte des moyens de commande 16 destinés à générer au moins une commande impulsionnelle. Ladite au moins une commande impulsionnelle est transmise à un port d'entrée 5A, 5B, 5C du bloc passif de transformation 2 via des moyens de communication très basse tension 11 de type BUS.

A titre d'exemple, les moyens de commande 16 comportent au moins un interrupteur à deux positions destiné à générer une commande impulsionnelle de type ouvert - fermé. Chacun des au moins deux interrupteurs est destiné à mettre en court-circuit le bus interne commun 18D et un des bus internes d'information 18.

Ainsi, au moment de la connexion d'un récepteur de commande très basse tension 10 sur un des ports d'entrée 5A, 5B, 5C de l'interface de commande 1, on constate un appairage associant une commande impulsionnelle de type ouvert-fermé à un ordre de commande très basse tension et à un ordre de commande de puissance d'un effecteur de puissance 100. Cet appairage est réalisé grâce et au moment du brachement électrique du premier port de connexion 15 dudit récepteur à un port d'entrée donné. Pour un même récepteur de commande très basse tension 10, l'appairage sera différent si le branchement est fait sur le port d'entrée référencé 5A ou s'il est fait sur le port d'entrée référencé 5A.

Autrement dit, comme représenté sur la figure 1, le branchement d'un premier récepteur de commande très basse tension 10 sur le premier port d'entrée 5A implique que l'actionnement d'un premier interrupteur dudit récepteur entraine la commande d'éclairage et implique que l'actionnement du second interrupteur entraine la commande d'ouverture/fermeture d'occultant. En effet, la mise en court-circuit du bus interne commun 18D et d'un premier bus interne d'information 18 via le premier interrupteur entraine la mise en court-circuit le bus interne d'information référencé sur le numéro 7A et le bus commun interne 7D. Compte tenu du scénario pré-établi un ordre de commande de puissance d'éclairage est alors généré. La mise en court-circuit du bus interne commun 18D et un d'un premier bus interne d'information 18 via le second interrupteur entraine la mise en court-circuit le bus interne d'information référencé sur le numéro 7B et le bus commun interne 7D. Compte tenu du scénario pré-établi un ordre de commande de puissance d'ouverture/fermeture d'occultant est alors généré.

Le branchement d'un second récepteur de commande très basse tension 10 sur le second port d'entrée 5B implique que l'actionnement d'un premier interrupteur dudit récepteur entraine la commande d'éclairage et implique que l'actionnement du second interrupteur entraine la commande de chauffage.

Enfin, le branchement d'un troisième récepteur de commande très basse tension 10 sur le troisième port d'entrée 5C implique que l'actionnement d'un premier interrupteur dudit récepteur entraine la commande de chauffage et implique que l'actionnement du second interrupteur entraine la commande d'ouverture/fermeture d'moyens occultant.

Selon un mode particulier de l'invention, les récepteurs de commande très basse tension 10 comportent au moins un second port de connexion 17 relié au premier port de connexion 15. A titre d'exemple de réalisation, ledit au moins un second moyen de connexion 17 est relié au premier port de connexion via des pistes électriques du circuit. Ledit au moins un second port de connexion 17 comprennent de préférence une prise débrochable. A titre d'exemple de réalisation, la prise débrochable est de type RJ 45.

Comme représenté sur la figure 1, selon un mode particulier de réalisation de l'invention, les récepteurs de commande très basse tension 10 comportent deux seconds ports de connexion 17 destinés au branchement série ou parallèle d'au moins un second récepteur de commande très basse tension 10. Selon une variante non représentée, les récepteur de commande très basse tension 10 peuvent comporter plus de deux seconds ports de connexion 17.

Ledit au moins second récepteur de commande très basse tension 10 est destiné à générer les mêmes commandes impulsionnelles de type tout ou rien que le récepteur de commande très basse tension 10 auquel il est connecté. En outre, le nombre de récepteur de commande très basse tension 10 connectés les uns aux autres n'est pas limité. Cependant, selon l'exemple de réalisation, tous les premiers interrupteurs de tous les récepteur de commande très basse tension 10 connectés à une même chaine sont destinés à l'actionnement d'un même effecteur. Tous les seconds interrupteurs de tous les récepteur de commande très basse tension 10 connectés à une même chaine sont destinés à l'actionnement d'un même effecteur différent du précédent.

Selon une variante non représentée, le bloc passif de transformation peut comporter au moins quatre ports d'entrée.

Selon une variante non représentée, chaque port d'entrée peut être relié à au moins quater secondes entrées.

## Revendications

1. Interface de commande (1) d'effecteurs destinée à commander des effecteurs de puissance (100), l'interface de commande (1) comprenant un bloc de contrôle actif (3) destiné à transformer un ordre de commande très basse tension émis par au moins un récepteur de commande très basse tension (10) en une commande électrique destinée à au moins un effecteur de puissance (100), l'interface de commande étant **caractérisée en ce qu'**elle comprend un bloc passif de transformation (2) relié au bloc de contrôle actif (3) par des liaisons électriques très basse tension (4), le bloc passif de transformation (2) comprenant :
- au moins deux ports d'entrée (5A, 5B, 5C) destinés à être reliés respectivement à un récepteur de commande très basse tension (10) via des moyens de communication très basse tension (11) de type BUS,
- au moins deux sorties (6) interconnectées avec lesdits au moins deux ports d'entrée (5A, 5B, 5C) et reliées au bloc de contrôle actif (3) via les liaisons électriques très basse tension (4),
le bloc de contrôle actif (3) comprenant des moyens de traitement destinés à transformer des ordres de commande très basse tension transmis par les liaisons électriques très basse tension (4) en ordre de commande de puissance pour commander de manière dédiée au moins un effecteur de puissance (100), la transformation des ordres de commande très basse tension en ordre de commande de puissance étant réalisée en fonction de scénarios programmés dans ledit bloc,
ledit bloc passif de transformation (2) comporte des moyens internes de connexion permettant un chainage entre chacune des entrées des ports d'entrée (5A, 5B, 5C) destinées à la commande d'une même fonction, chaque chainage autorisant la mise en connexion électrique d'au moins une entrée avec une seule liaison électrique très basse tension (4) ;
chaque port d'entrée (5A, 5B, 5C) du bloc passif de transformation (2) comporte une entrée reliée à un premier bus interne commun (7D) et au moins un second entrée reliée à un bus interne d'information (7A, 7B, 7C),
- une première sortie (6) du bloc passif de transformation (2) étant interconnectée avec tous les bus internes communs (7D) et étant reliée au bloc de contrôle actif (3) via une première liaison électrique très basse tension (4),
- au moins un seconde sortie (6) du bloc passif de transformation (2) étant interconnectée avec au moins un bus interne d'information (7A, 7B, 7C) et étant reliée au bloc de contrôle actif (3) via au moins une seconde liaison électrique très basse tension (4).

2. Interface de commande selon la revendication 1, **caractérisée en ce que** chaque seconde sortie (6) est reliée à au moins deux ports d'entrée (5A, 5B, 5C) distincts du bloc passif de transformation (2) via un bus interne d'information (7A, 7B, 7C).

3. Interface de commande selon l'une quelconque des revendications précédentes, **caractérisée en ce que** les ports d'entrée (5A, 5B, 5C) du bloc passif de transformation (2) comportent des moyens de connexion destinés à être reliés à un récepteur de commande très basse tension (10) via des moyens de communication très basse tension (11) de type BUS.

4. Interface de commande d'effecteurs selon la revendication 3, **caractérisée en ce que** les moyens de connexion comporte une prise débrochable.

5. Combinaison comprenant un recepteur de commande très basse tension (10) et une interface de commande (1) d'effecteurs selon les revendications 1 à 4, **caractérisé en ce que** le récepteur est connecté à ladite interface de commande et que le récepteur comporte des moyens de commande (16) destinés à générer au moins une commande impulsionnelle, ladite au moins une commande impulsionnelle étant transmise à un port d'entrée (5A, 5B, 5C) du bloc passif de transformation (1) via des moyens de communication très basse tension (11) de type BUS pour mettre en court-circuit le bus interne commun (7D) et un bus interne d'information (7A, 7B, 7C).

6. Combinaison selon la revendication 5, **caractérisé en ce que** les moyens de commande (16) comportent au moins un interrupteur à deux positions destiné à générer une commande impulsionnelle de type ouvert-fermé.

7. Combinaison selon l'une des revendications 5 ou 6, **caractérisé en ce que** le récepteur comporte des premiers moyens de connexion (15) reliés à un port d'entrée (5A, 5B, 5C) d'un bloc passif de transformation (2) via des moyens de communication très basse tension (11) de type BUS.

8. Combinaison selon la revendication 7, **caractérisé en ce que** les premiers moyens de connexion (15) comportent une prise débrochable.

9. Combinaison selon l'une quelconque des revendications 5 à 8, **caractérisé en ce que** le récepteur comporte des seconds moyens de connexion (17) reliés au premiers moyens de connexion (15) et étant destinés au branchement série ou parallèle d'au moins un second récepteur de commande très basse tension (10), ledit au moins second récepteur de commande très basse tension (10) étant destiné à générer les mêmes commandes impulsionnelles de type ouvert-fermé que le récepteur de commande très basse tension (10) auquel il est connecté.

## Patentansprüche

1. Steuerungsschnittstelle (1) von Effektoren, die dazu bestimmt ist, Leistungseffektoren (100) zu steuern, wobei die Steuerungsschnittstelle (1) einen aktiven Kontrollblock (3) enthält, der dazu bestimmt ist, einen Kleinspannungssteuerbefehl, der von mindestens einem Kleinspannungssteuerungsempfänger (10) ausgegeben wird, in eine elektrische Steuerung umzuwandeln, die für mindestens einen Leistungseffektor (100) bestimmt ist, wobei die Steuerungsschnittstelle **dadurch gekennzeichnet ist, dass** sie einen passiven Umwandlungsblock (2) enthält, der mit dem aktiven Kontrollblock (3) durch elektrische Kleinspannungsverbindungen (4) verbunden ist, wobei der passive Umwandlungsblock (2) enthält:
- mindestens zwei Eingangsports (5A, 5B, 5C), die dazu bestimmt sind, je mit einem Kleinspannungssteuerungsempfänger (10) über Kleinspannung-Kommunikationseinrichtungen (11) der Art BUS verbunden zu werden,
- mindestens zwei Ausgänge (6), die mit den mindestens zwei Eingangsports (5A, 5B, 5C) zusammengeschaltet und mit dem aktiven Kontrollblock (3) über die elektrischen Kleinspannungsverbindungen (4) verbunden sind,
wobei der aktive Kontrollblock (3) Verarbeitungseinrichtungen enthält, die dazu bestimmt sind, Kleinspannungssteuerbefehle, die von den elektrischen Kleinspannungsverbindungen (4) übertragen werden, in einen Leistungssteuerbefehl umzuwandeln, um mindestens einen Leistungseffektor (100) dediziert zu steuern, wobei die Umwandlung der Kleinspannungssteuerbefehle in einen Leistungssteuerbefehl abhängig von programmierten Szenarien im Block durchgeführt wird,
der passive Umwandlungsblock (2) interne Anschlusseinrichtungen aufweist, die eine Verkettung zwischen jedem der Eingänge der Eingangsports (5A, 5B, 5C) ermöglichen, die zur Steuerung einer gleichen Funktion bestimmt sind, wobei jede Verkettung den elektrischen Anschluss mindestens eines Eingangs an eine einzige elektrische Kleinspannungsverbindung (4) erlaubt;
jeder Eingangsport (5A, 5B, 5C) des passiven Umwandlungsblocks (2) einen mit einem ersten gemeinsamen internen Bus (7D) verbundenen Eingang und mindestens einen mit einem internen Informationsbus (7A, 7B, 7C) verbundenen zweiten Eingang aufweist,
- wobei ein erster Ausgang (6) des passiven Umwandlungsblocks (2) mit allen gemeinsamen internen Bussen (7D) zusammengeschaltet und mit dem aktiven Kontrollblock (3) über eine erste elektrische Kleinspannungsverbindung (4) verbunden ist,
- wobei mindestens ein zweiter Ausgang (6) des passiven Umwandlungsblocks (2) mit mindestens einem internen Informationsbus (7A, 7B, 7C) zusammengeschaltet und mit dem aktiven Kontrollblock (3) über mindestens eine zweite elektrische Kleinspannungsverbindung (4) verbunden ist.

2. Steuerungsschnittstelle nach Anspruch 1, **dadurch gekennzeichnet, dass** jeder zweite Ausgang (6) mit mindestens zwei unterschiedlichen Eingangsports (5A, 5B, 5C) des passiven Umwandlungsblocks (2) über einen internen Informationsbus (7A, 7B, 7C) verbunden ist.

3. Steuerungsschnittstelle nach einem der vorhergehenden Ansprüche, **dadurch gekennzeichnet, dass** die Eingangsports (5A, 5B, 5C) des passiven Umwandlungsblocks (2) Anschlusseinrichtungen aufweisen, die dazu bestimmt sind, mit einem Kleinspannungssteuerungsempfänger (10) über Kleinspannung-Kommunikationseinrichtungen (11) der Art BUS verbunden zu werden.

4. Steuerungsschnittstelle von Effektoren nach Anspruch 3, **dadurch gekennzeichnet, dass** die Anschlusseinrichtungen einen herausziehbaren Stecker aufweisen.

5. Kombination, die einen Kleinspannungssteuerungsempfänger (10) und eine Steuerungsschnittstelle (1) von Effektoren nach den Ansprüchen 1 bis 4 enthält, **dadurch gekennzeichnet, dass** der Empfänger an die Steuerungsschnittstelle angeschlossen ist, und dass der Empfänger Steuereinrichtungen (16) aufweist, die dazu bestimmt sind, mindestens eine Impulssteuerung zu erzeugen, wobei die mindestens eine Impulssteuerung an einen Eingangsport (5A, 5B, 5C) des passiven Umwandlungsblocks (1) über Kleinspannung-Kommunikationseinrichtungen (11) der Art BUS übertragen wird, um den internen gemeinsamen Bus (7D) und einen internen Informationsbus (7A, 7B, 7C) kurzzuschließen.

6. Kombination nach Anspruch 5, **dadurch gekennzeichnet, dass** die Steuereinrichtungen (16) mindestens einen Schalter mit zwei Schaltstellungen aufweisen, der dazu bestimmt ist, eine Impulssteuerung der Art offen-geschlossen zu erzeugen.

7. Kombination nach einem der Ansprüche 5 oder 6, **dadurch gekennzeichnet, dass** der Empfänger erste Anschlusseinrichtungen (15) aufweist, die mit einem Eingangsport (5A, 5B, SC) eines passiven Umwandlungsblocks (2) über Kleinspannung-Kommunikationseinrichtungen (11) der Art BUS verbunden sind.

8. Kombination nach Anspruch 7, **dadurch gekennzeichnet, dass** die ersten Anschlusseinrichtungen (15) einen herausziehbaren Stecker aufweisen.

9. Kombination nach einem der Ansprüche 5 bis 8, **dadurch gekennzeichnet, dass** der Empfänger zweite Anschlusseinrichtungen (17) aufweist, die mit den ersten Anschlusseinrichtungen (15) verbunden und für die Reihen- oder Parallelschaltung mindestens eines zweiten Kleinspannungssteuerungsempfängers (10) bestimmt sind, wobei der mindestens zweite Kleinspannungssteuerungsempfänger (10) dazu bestimmt ist, die gleichen Impulssteuerungen der Art offen-geschlossen zu erzeugen wie der Kleinspannungssteuerungsempfänger (10), an den er angeschlossen ist.

## Claims

1. Effector command interface (1) intended to command power effectors (100), the command interface (1) comprising an active control unit (3) that is intended to convert a very-low-voltage command order sent by at least one very-low-voltage command receiver (10) into an electrical command intended for the at least one power effector (100), the command interface being **characterized in that** it comprises a passive conversion unit (2) connected to the active control unit (3) by very-low-voltage electrical links (4), the passive conversion unit (2) comprising:
- at least two input ports (5A, 5B, 5C) that are intended to be connected to a very-low-voltage command receiver (10) via very-low-voltage communication means (11) of bus type,
- at least two outputs (6) that are interconnected with said at least two input ports (5A, 5B, 5C) and connected to the active control unit (3) via very-low-voltage electrical links (4),
the active control unit (3) comprising processing means intended to convert very-low-voltage command orders transmitted by the very-low-voltage electrical links (4) into a power command order for commanding, in a dedicated manner, at least one power effector (100), the conversion of the very-low-voltage command orders into a power command order being carried out depending on scenarios programmed into said unit;
said passive conversion unit (2) comprises internal connection means allowing each of those inputs of the input ports (5A, 5B, 5C) that are intended to command a given function to be connected in series, each series connection permitting a least one input to be electrically connected with a single very-low-voltage electrical link (4);
each input port (5A, 5B, 5C) of the passive conversion unit (2) comprises an input connected to a common internal first bus (7D) and at least one second input connected to an internal data bus (7A, 7B, 7C),
- a first output (6) of the passive conversion unit (2) being interconnected with all the common internal buses (7D) and being connected to the active control unit (3) via a first very-low-voltage electrical link (4),
- at least one second output (6) of the passive conversion unit (2) being interconnected with at least one internal data bus (7A, 7B, 7C) and being connected to the active control unit (3) via at least one second very-low-voltage electrical link (4).

2. Command interface according to Claim 1, **characterized in that** each second output (6) is connected to at least two separate input ports (5A, 5B, 5C) of the passive conversion unit (2) via one internal data bus (7A, 7B, 7C).

3. Command interface according to any one of the preceding claims, **characterized in that** the input ports (5A, 5B, 5C) of the passive conversion unit (2) comprise connection means intended to be connected to a very-low-voltage command receiver (10) by very-low-voltage communication means (11) of bus type.

4. Effector command interface according to Claim 3, **characterized in that** the connection means comprise an unpluggable jack.

5. Combination comprising a very-low-voltage command receiver (10) and an effector command interface (1) according to Claims 1 to 4, **characterized in that** the receiver is connected to said command interface and **in that** the receiver comprises command means (16) intended to generate at least one pulsed command, said at least one pulsed command being transmitted to an input port (5A, 5B, 5C) of the passive conversion unit (1) via very-low-voltage communication means (11) of bus type with a view to short-circuiting the common internal bus (7D) and an internal data bus (7A, 7B, 7C).

6. Combination according to Claim 5, **characterized in that** the command means (16) comprise at least one two-position switch intended to generate a pulsed command of open-closed type.

7. Combination according to either of Claims 5 and 6, **characterized in that** the receiver comprises first connection means (15) connected to an input port (5A, 5B, 5C) of a passive conversion unit (2) via very-low-voltage communication means (11) of bus type.

8. Combination according to Claim 7, **characterized in that** the first connection means (15) comprise an unpluggable jack.

9. Combination according to any one of Claims 5 to 8, **characterized in that** the receiver comprises second connection means (17) connected to the first connection means (15) and being intended for the series or parallel connection of at least one second very-low-voltage command receiver (10), said at least one second very-low-voltage command receiver (10) being intended to generate the same pulsed commands of open-closed type as the very-low-voltage command receiver (10) to which it is connected.
